# EUROPÄISCHE PATENTANMELDUNG

(11) **EP 1 637 203 A1**
(43) Veröffentlichungstag der Anmeldung: **22.03.2006**
(21) Anmeldenummer: 04021901.6
(22) Anmeldetag: 15.09.2004
(51) Int. Cl.: B01D 17/00, B01D 36/00, B65D 45/22, B65D 45/02

(54) **Vorrichtung zum Abtrennen von Feststoffteilchen und Fluiden höherer Dichte von Fluiden niederer Dichte**

(71) Anmelder: Willibrord Lösing Filterproduktion GmbH, 45529 Hattingen (DE)
(72) Erfinder: Blaschke, Otto, 1220 Wien (AT); Klems, Josef, 45711 Datteln (DE)
(74) Vertreter: Rohmann, Michael

(57) **Zusammenfassung**

Vorrichtung zum Abtrennen von Feststoffteilchen und Fluiden höherer Dichte von Fluiden niederer Dichte, wobei ein Gehäuse (1) aus mit Einlasskanal (7) und Auslass (8) versehenem Zentralteil (2), oberer Deckelanordnung (3) und becherförmigem Unterteil (4) eine Längskammer (5) bildet. Die Deckelanordnung (3) besteht aus einem Betätigungselement (30), einer Spannbrücke (31) und einem Deckel (32). Durch Betätigen des Betätigungselementes (30) ist die Spannbrücke (31) an dem Zentralteil (2) fixierbar. Das Betätigungselement (30) durchgreift die Spannbrücke (31). Durch weitere Betätigung des Betätigungselementes (30) ist der unterhalb der Spannbrücke (31) angeordnete Deckel (32) von dem Betätigungselement (30) beaufschlagbar und an das Zentralteil (2) andrückbar. Ein sich am Deckel (32) abstützendes Andruckelement (39) drückt einen Filtereinsatz (9) gegen einen Sitz (26).

## Beschreibung

Die Erfindung betrifft eine Vorrichtung zum Abtrennen von Feststoffteilchen und Fluiden höherer Dichte von Fluiden niederer Dichte, wobei ein Gehäuse aus mit Einlasskanal und Auslass versehenen Zentralteil, oberen Deckel und becherförmigem Unterteil eine Längskammer bildet, wobei im Unterteil ein Umlenkungsabscheider ausgebildet ist, sowie im Zentralteil ein Filtereinsatz angeordnet ist und wobei ein sich am Deckel abstützendes Andrückelement den Filtereinsatz gegen einen Sitz drückt.

Eine Vorrichtung der vorstehend genannten Art, von der die Erfindung ausgeht, ist aus EP 0 416 146 B1 bekannt. Bei dieser bekannten Vorrichtung besteht die Deckelanordnung lediglich aus einem einzigen Deckel, der an das Zentralteil des Gehäuses mittels mehrerer Schrauben angeschraubt ist. Diese bekannte Vorrichtung hat sich grundsätzlich in hervorragender Weise bewährt.

Der Erfindung liegt das technische Problem zugrunde, eine Vorrichtung der eingangs genannten Art anzugeben, die mit einer Deckelanordnung ausgestattet ist die sich auf einfache Weise öffnen und schließen lässt und mit der ein einwandfreier und funktionssicherer Betrieb der Vorrichtung nichtsdestoweniger gewährleistet ist.

Zur Lösung dieses technischen Problems lehrt die Erfindung eine Vorrichtung zum Abtrennen von Feststoffteilchen und Fluiden höherer Dichte von Fluiden niederer Dichte, wobei ein Gehäuse aus mit Einlasskanal und Auslass versehenem Zentralteil, oberer Deckelanordnung und becherförmigem Unterteil eine Längskammer bildet,
wobei im Unterteil ein Umlenkungsabscheider ausgebildet ist, sowie im Zentralteil ein Filtereinsatz angeordnet ist,
wobei die Deckelanordnung aus einem Betätigungselement, einer Spannbrücke und einem Deckel besteht,
wobei durch Betätigen des Betätigungselementes die Spannbrücke an dem Zentralteil fixierbar ist,
wobei das Betätigungselement die Spannbrücke durchgreift und wobei durch eine weitere Betätigung des Betätigungselementes der unterhalb der Spannbrücke angeordnete Deckel von dem Betätigungselement beaufschlagbar und an das Zentralteil andrückbar ist
und wobei ein sich am Deckel abstützendes Andrückelement den Filtereinsatz gegen einen Sitz drückt.

Es liegt im Rahmen der Erfindung, dass die Spannbrücke oberhalb des Deckels angeordnet ist. Fernerhin liegt es im Rahmen der Erfindung, dass sowohl der Deckel als auch die Spannbrücke plattenförmig ausgebildet sind. Nach einer Ausführungsform der Erfindung sind sowohl der Deckel als auch die Spannbrücke im Wesentlichen rechteckförmig ausgeführt. Zweckmäßigerweise entspricht die Deckelfläche in etwa der Fläche der Spannbrücke.

Nach bevorzugter Ausführungsform der Erfindung wird die Spannbrücke durch ein erstes Verdrehen des Betätigungselementes bajonettverschlussartig an dem Zentralteil des Gehäuses fixiert. Bei diesem ersten Verdrehen des Betätigungselementes dreht die Spannbrücke mit dem Betätigungselement gemeinsam. Hierzu ist zweckmäßigerweise eine formschlüssige Verbindung zwischen Betätigungselement und Spannbrücke im Durchgriffsbereich des Betätigungselementes vorgesehen. Bei der ersten Drehung des Betätigungselementes findet also keine relative Verdrehung zwischen Betätigungselement und Spannbrücke statt, sondern eine gemeinsame Drehung von Betätigungselement und Spannbrücke in die fixierte Stellung bzw. in die Bajonettverschlussstellung der Spannbrücke.

Vorzugsweise sind an der Spannbrücke außenseitig Fixierungsnasen angeschlossen und diese Fixierungsnasen sind bei dem ersten Verdrehen des Betätigungselementes bzw. der Spannbrücke aus einer freien Stellung in eine Bajonettverschlussstellung überführbar, in welcher Bajonettverschlussstellung diese Fixiernasen am Zentralteil des Gehäuses angeschlossene Fixierungsvorsprünge hintergreifen bzw. untergreifen. Bei der Bajonettverschlussstellung handelt es sich um die fixierte Stellung der Spannbrücke. Es liegt im Rahmen der Erfindung, dass zumindest ein Anschlagelement vorgesehen ist, welches Anschlagelement ein weiteres Verdrehen der Spannbrücke in Drehrichtung der ersten Drehung blockiert. Nach bevorzugter Ausführungsform der Erfindung ist zumindest ein Fixierungsvorsprung des Zentralteils als ein die weitere Drehung der Spannbrücke blockierendes Anschlagelement ausgebildet. In der fixierten Stellung bzw. in der Bajonettverschlussstellung ist also eine weitere Verdrehung der Spannbrücke nicht mehr möglich. Allerdings ist eine Drehung in die entgegengesetzte Richtung möglich, wodurch dann die Spannbrücke von dem Zentralteil lösbar ist. Es liegt im Rahmen der Erfindung, dass zumindest zwei Fixierungsnasen an der Spannbrücke vorgesehen sind. Wenn die Spannbrücke nach bevorzugter Ausführungsform der Erfindung rechteckförmig bzw. im Wesentlichen rechteckförmig ausgebildet ist, so ist eine Fixierungsnase zweckmäßigerweise an jeder Ecke des Rechteckes vorhanden und am Zentralteil sind dann entsprechend den Fixierungsnasen zugeordnete Fixierungsvorsprünge angeschlossen.

Das Betätigungselement weist vorzugsweise ein aus der Spannbrücke herausragendes Manipulierelement auf. Zweckmäßigerweise kann dieses Manipulierelement mit einer Hand erfasst werden und dann kann das Betätigungselement entsprechend verdreht werden. Es liegt dabei im Rahmen der Erfindung, dass das Betätigungselement bzw. das Manipulierelement des Betätigungselementes lediglich mit einer Hand und ohne Werkzeug betätigbar ist.

Nach sehr bevorzugter Ausführungsform der Erfindung wird bei einem zweiten Verdrehen des Betätigungselementes in der fixierten Stellung der Spannbrücke eine Druckbeaufschlagung durch das Betätigungselement auf den Deckel ausgeübt, so dass der Deckel an das Zentralteil des Gehäuses gedrückt wird. Es liegt dabei im Rahmen der Erfindung, dass diese zweite Drehung des Betätigungselementes in die gleiche Drehrichtung erfolgt wie die erste Drehung des Betätigungselementes. In der fixierten Stellung der Spannbrücke ist die Spannbrücke gegen ein Mitdrehen gesichert, wozu vorzugsweise die oben bereits genannten Anschlagelemente vorgesehen sind. Bei der zweiten Drehung des Betätigungselementes findet also ein relatives Verdrehen des Betätigungselementes zur Spannbrücke statt.

Vorzugsweise ist das die Spannbrücke durchgreifende Betätigungselement als Schraubelement ausgebildet. Das Schraubelement weist dabei ein Außengewinde auf und eine das Betätigungselement aufnehmende Öffnung in der Spannbrücke weist ein mit dem Außengewinde des Betätigungselementes wechselwirkendes Innengewinde auf. Gemäß dieser bevorzugten Ausführungsform wird das Betätigungselement gleichsam in die Spannbrücke eingeschraubt und drückt dabei auf den Deckel. Es liegt im Rahmen der Erfindung, dass bei eingeschraubtem Betätigungselement der Deckel das Zentralteil bzw. das Gehäuse abdichtet. Wie oben bereits dargelegt, wird die Spannbrücke dabei gegen ein Mitdrehen gesichert und zwar zweckmäßigerweise durch bereits erläuterte Anschlagelemente.

Zweckmäßigerweise stützt sich das Andruckelement federnd am Deckel ab. Dazu ist vorzugsweise zumindest eine Schraubenfeder zwischen Deckel und Andruckelement angeordnet. Nach sehr bevorzugter Ausführungsform der Erfindung sind vier Schraubenfedern zwischen Deckel und Andruckelement vorhanden, wobei die vier Schraubenfedern jeweils an den vier Ecken des rechtwinkligen Deckels angeschlossen sind sowie an vier Ecken eines rechtwinkligen Andruckrahmens (Andruckelement) angeschlossen sind. Die Schraubenfedern stützen sich sowohl an der Unterseite des Deckels als auch an dem Andruckrahmen ab.

Nach bevorzugter Ausführungsform der Erfindung ist im Deckel eine verschließbare Entlüftungsöffnung vorgesehen und weist die Spannbrücke zumindest eine Zugangsöffnung auf, die in der fixierten Stellung der Spannbrücke mit der Entlüftungsöffnung des Deckels fluchtet. Auf diese Weise wird auch in der fixierten Stellung der Spannbrücke ein Zugang zu der Entlüftungsöffnung im Deckel gewährleistet. Zweckmäßigerweise ist die Entlüftungsöffnung im Deckel mit einer Entlüftungsschraube verschließbar. Es liegt im Rahmen der Erfindung, dass in der Spannbrücke zwei oder mehr Zugangsöffnungen vorgesehen sind, so dass in jeder Position der Spannbrücke in ihrer fixierten Stellung ein Zugang zu der Entlüftungsöffnung gewährleistet ist.

Der Erfindung liegt die Erkenntnis zugrunde, dass die erfindungsgemäße Deckelanordnung der Vorrichtung ein sehr einfaches und wenig aufwendiges Verschließen und Öffnen des Gehäuses ermöglicht. Die Vorrichtung kann schnell und funktionssicher montiert werden, wobei die Betätigung lediglich per Hand erfolgen kann, ohne dass Hilfsmittel wie Werkzeuge und dergleichen notwendig sind. Von besonderer Bedeutung ist im Rahmen der Erfindung, dass bei der erfindungsgemäßen Ausgestaltung ein sehr gezieltes, präzises und gleichmäßiges Einwirken auf den Filtereinsatz stattfinden kann. Wenn das Betätigungselement in die Spannbrücke eingeschraubt wird und der Deckel entsprechend von dem Betätigungselement beaufschlagt wird, kann der Deckel kontinuierlich und gleichmäßig auf das auf den Filtereinsatz drückende Andruckelement einwirken. Gleichzeitig wird auch eine funktionssichere Abdichtung des Gehäuses erreicht. Im Ergebnis kann im Vergleich zu ähnlichen aus dem Stand der Technik bekannten Vorrichtungen eine sehr präzise und gleichmäßige Flächenpressung auf den Filtereinsatz ausgeübt werden. Das führt überraschenderweise auch zu einer Verbesserung der Filterwirkung der Vorrichtung.

Der Filtereinsatz ist im Zentralteil zweckmäßigerweise über dem Einlasskanal angeordnet. Vorzugsweise besteht der Umlenkungsabscheider aus dem unteren Ende eines an den Einlasskanal anschließenden Führungsrohres, welches Führungsrohr sich bevorzugt längs der Kammerachse mit Abstand vom Unterteil über einen Teil von dessen Höhe in das Unterteil hinein erstreckt. Nach bevorzugter Ausführungsform bildet das Führungsrohr zusammen mit einem im Führungsrohr angeordneten Schraubenkörpereinsatz einen Drallströmungskanal mit unteren Fluidaustrittsöffnungen.

Nachfolgend wird die Erfindung anhand einer lediglich ein Ausführungsbeispiel darstellenden Zeichnung näher erläutert. Es zeigen in schematischer Darstellung:
- **Fig. 1**: einen Schnitt durch eine erfindungsgemäße Vorrichtung,
- **Fig. 2**: eine Draufsicht auf eine erfindungsgemäße Vorrichtung und
- **Fig. 3**: den Gegenstand nach Fig. 2 ohne Deckelanordnung.

Die Figuren zeigen eine Vorrichtung zum Abtrennen von Feststoffteilchen und Fluiden höherer Dichte von Fluiden niederer Dichte. Die Vorrichtung dient beispielsweise zur Abtrennung von Schmutzpartikeln und Wasser von Flüssigbrennstoffen wie Benzin und Diesel bzw. Heizöl. Die Vorrichtung weist ein Gehäuse 1 auf, das aus einem Zentralteil 2, einer oberen Deckelanordnung 3 und einem becherförmigen Unterteil 4 aufgebaut ist und eine Längskammer 5 bildet. Im Unterteil 4 ist ein Umlenkungsabscheider 6 ausgebildet. Im Zentralteil 2, das mit einem Einlasskanal 7 und einem Auslass 8 versehen ist, ist über dem Einlasskanal 7 ein Filtereinsatz 9 angeordnet.

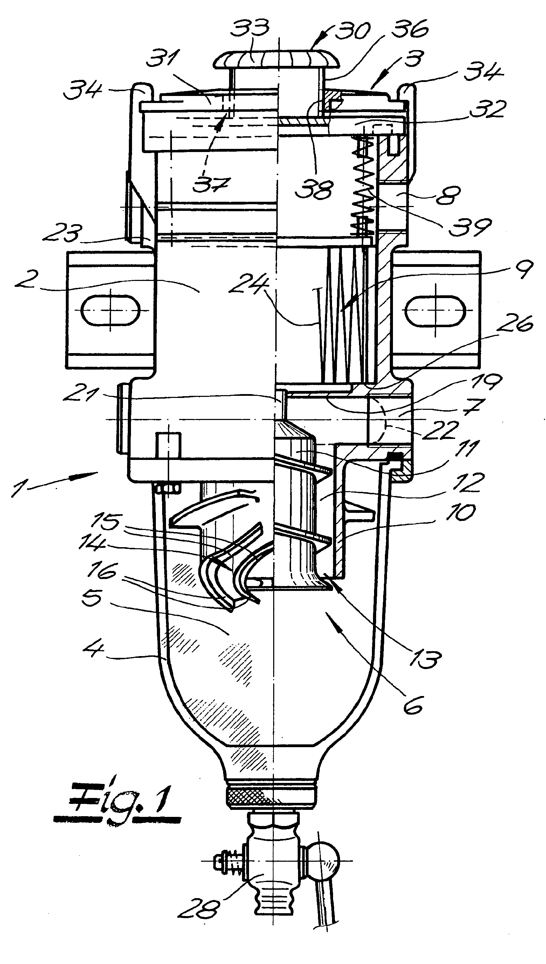

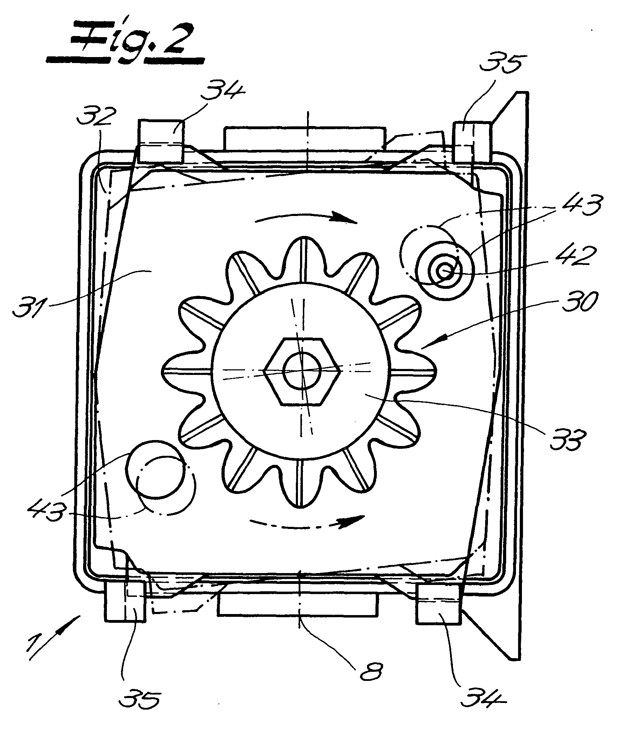

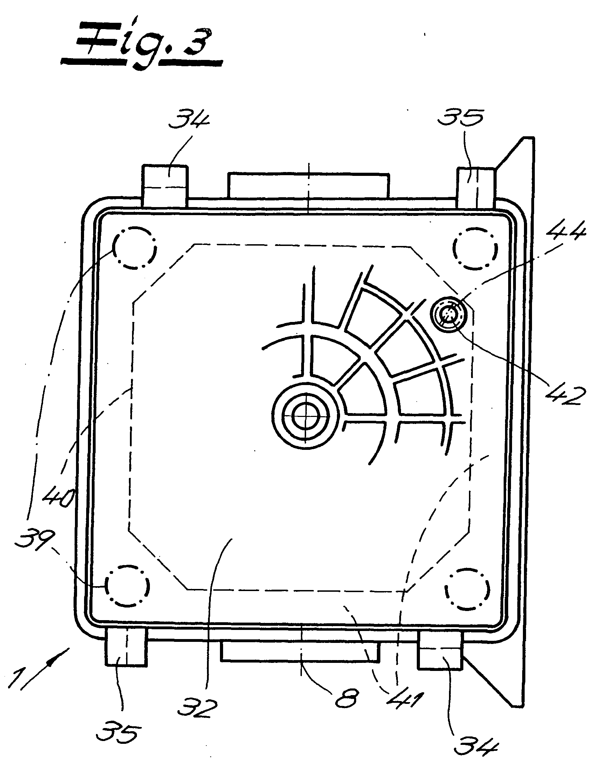

In den Fig. 1 und 2 ist erkennbar, dass die Deckelanordnung 3 aus einem Betätigungselement 30, einer Spannbrücke 31 und einem Deckel 32 besteht. Es ist erkennbar, dass die Spannbrücke 31 oberhalb des Deckels 32 angeordnet ist. Sowohl Spannbrücke 31 als auch Deckel 32 sind plattenförmig ausgebildet. Der Deckel 32 hat im Ausführungsbeispiel eine rechteckige Form und auch die Spannbrücke 31 hat im Ausführungsbeispiel eine im Wesentlichen rechteckige Form. Zweckmäßigerweise und im Ausführungsbeispiel entspricht die Fläche der Spannbrücke 31 im Wesentlichen der Fläche des Deckels 32. Nach bevorzugter Ausführungsform sind Spannbrücke 31 und Deckel 32 durch eine lösbare Rastverbindung bzw. Clipverbindung miteinander verbunden. Das ist in den Figuren nicht dargestellt. Deckel 32, Spannbrücke 31 und in der Spannbrücke aufgenommenes Betätigungselement 30 bilden also gleichsam ein Teil bzw. Bauelement, so dass die Montage relativ einfach bzw. bedienerfreundlich ist.

Es liegt im Rahmen der Erfindung, dass die Spannbrücke 31 durch ein erstes Drehen des die Spannbrücke 31 durchgreifenden Betätigungselementes bajonettverschlussartig an dem Zentralteil 2 des Gehäuses 1 fixierbar ist. Das Betätigungselement 30 weist zweckmäßigerweise und im Ausführungsbeispiel ein aus der Spannbrücke herausragendes Manipulierelement 33 in Form eines Drehknopfes auf, so dass das Betätigungselement 30 einfach mit einer Hand und ohne Zuhilfenahme von Werkzeugen betätigt bzw. verdreht werden kann. Bei der ersten Drehung des Betätigungselementes 30 dreht die Spannbrücke 31 mit dem Betätigungselement 30. Dafür sorgt eine weiter unten noch erläuterte formschlüssige Verbindung im Durchgriffsbereich zwischen Betätigungselement 30 und Spannbrücke 31. Bei der ersten Drehung des Betätigungselementes 30 findet also keine relative Drehung zwischen Betätigungselement 30 und Spannbrücke 31 statt, sondern eine gemeinsame Drehung von der "freien" Stellung der Spannbrücke 31 in die fixierte Stellung bzw. Bajonettschlussstellung der Spannbrücke 31. Die freie Stellung ist in Fig. 2 strichpunktiert verdeutlicht worden, während die fixierte Stellung durchgezogen gezeichnet ist. Die Spannbrücke 31 ist in Richtung des durchgezogenen Pfeils aus der freien Stellung in die fixierte Stellung nach rechts verdrehbar.

Vorzugsweise und im Ausführungsbeispiel sind an den Ecken der Spannbrücke 31 außenseitig Fixierungsnasen 34 angeschlossen. Diese Fixierungsnasen 34 sind bei der ersten Drehung des Betätigungselementes 30 ebenfalls aus einer freien Stellung in die Bajonettverschlussstellung überführbar, in welcher Bajonettverschlussstellung die Fixierungsnasen 34 am Zentralteil 2 angeschlossene Fixierungsvorsprünge 35 untergreifen. Es liegt fernerhin im Rahmen der Erfindung, dass Anschläge vorgesehen sind, die ein weiteres Drehen der Spannbrücke 31 in die Drehrichtung der ersten Drehung blockieren. Im Ausführungsbeispiel sind zwei diagonal gegenüberliegende Fixierungsvorsprünge 35 des Zentralteils 2 als solche Anschläge ausgebildet und blockieren ein Weiterdrehen der Spannbrücke 31.

In der fixierten Stellung der Spannbrücke 31 (in Fig. 2 durchgezogen gezeichnet) ist zwar keine weitere Drehung der Spannbrücke 31 in Drehrichtung der ersten Drehung mehr möglich, allerdings kann das Betätigungselement 30 weiter in diese Richtung verdreht werden. Bei diesem zweiten Verdrehen des Betätigungselementes 30 in der fixierten Stellung der Spannbrücke 31 wird eine Druckbeaufschlagung durch das Betätigungselement 30 selbst auf den Deckel 32 ausgeübt, so dass der Deckel 32 an das Zentralteil 2 gedrückt wird. Das die Spannbrücke 31 durchgreifende Betätigungselement 30 ist vorzugsweise und im Ausführungsbeispiel als Schraubelement ausgebildet. Das Betätigungselement 30 weist dazu ein Außengewinde 36 auf. Dementsprechend weist die das Betätigungselement aufnehmende Öffnung 37 in der Spannbrücke 31 ein mit dem Außengewinde 36 des Betätigungselementes 30 wechselwirkendes Innengewinde 38 auf.

Die Spannbrücke 31 wird durch Anschläge in ihrer fixierten Stellung gegen ein Mitdrehen mit dem Betätigungselement 30 gesichert. Bei der zweiten alleinigen Drehung des Betätigungselementes 30 wird das Betätigungselement 30 gleichsam in die Spannbrücke 31 eingeschraubt und beaufschlagt dabei den Deckel 32. Auf diese Weise kann eine sehr präzise und gleichmäßige Flächenpressung auf den Filtereinsatz 9 ausgeübt werden.

Erfindungsgemäß drückt ein sich am Deckel 32 abstützendes Andruckelement den Filtereinsatz 9 gegen einen Sitz 26. Dabei stützt sich das Andruckelement vorzugsweise und im Ausführungsbeispiel federnd an dem Deckel 32 ab. Nach einer Ausführungsform und im Ausführungsbeispiel findet diese federnde Abstützung mit Hilfe von Schraubenfedern 39 statt. Grundsätzlich liegt es aber auch im Rahmen der Erfindung, dass die federnde Abstützung mit Hilfe von Elastomerfedern verwirklicht werden kann. Vorzugsweise und im Ausführungsbeispiel ist an den vier Ecken des Deckels 32 jeweils eine Schraubenfeder 39 angeschlossen, wobei die Schraubenfedern an ihrem gegenüberliegenden Ende an den vier Ecken eines rechteckigen Andruckrahmens 40 angeschlossen sind. Der Andruckrahmen 40 besteht im Ausführungsbeispiel lediglich aus an den Rechteckseiten angeordneten vier Andruckstreben 41. Durch die zweite Drehung des Betätigungselementes 30 und somit durch das Einschrauben des Betätigungselementes 30 in die Spannbrücke 31 beaufschlagt das Betätigungselement 30 den Deckel 32, der wiederum über die Schraubenfedern den Andruckrahmen 40 gegen den Filtereinsatz 9 drückt. Wie oben bereits mehrfach dargelegt, wird hierdurch eine sehr gleichmäßige Flächenpressung auf den Filtereinsatz 9 ausgeübt und überraschenderweise wird durch die Anordnung die Filterwirkung verbessert.

Zweckmäßigerweise und im Ausführungsbeispiel ist in dem Deckel 32 eine verschließbare Entlüftungsöffnung 42 vorgesehen. Dazu weist die Spannbrücke 31 vorzugsweise und im Ausführungsbeispiel zwei Zugangsöffnungen 43 auf. In der fixierten Stellung der Spannbrücke 31 fluchtet eine Zugangsöffnung 43 mit der Entlüftungsöffnung 42. Die beiden Zugangsöffnungen 43 in der Spannbrücke 31 sollen gewährleisten, dass bei jeder Aufsetzposition der Spannbrücke 31 auf den Deckel 32 ein Zugang zu der Entlüftungsöffnung 42 gewährleistet ist. Im Ausführungsbeispiel ist die Entlüftungsöffnung 42 mit Hilfe einer Entlüftungsschraube 44 verschlossen.

Zweckmäßigerweise besteht der Umlenkungsabscheider 6 der Vorrichtung aus dem unteren Ende eines an den Einlasskanal 7 anschließenden Führungsrohres 10. Dieses Führungsrohr 10 erstreckt sich längs der Kammerachse mit Abstand vom Unterteil 4 über einen Teil von dessen Höhe in das Unterteil 4 hinein und bildet zusammen mit einem im Führungsrohr 10 angeordneten Schraubenkörpereinsatz 11 einen Drallströmungskanal 12 mit unteren Fluidaustrittsöffnungen 13. Zweckmäßigerweise sind zwei gegenüberliegende Fluidaustrittsöffnungen 13 verwirklicht. Vorzugsweise hat das Führungsrohr 10 an seinem unteren Ende zwischen diesen beiden benachbarten Fluidaustrittsöffnungen 13 jeweils einen äußeren, liegend V-förmig geführten Abscheidungsrückführkanal 14. Jeder dieser beiden Abscheidungsrückführkanäle 14 ist aus zwei mit Abstand voneinander verlaufenden Stegwinkelansätzen 15 aufgebaut, die bis an die Wandung des Unterteils 4 reichen. Der jeweils untere V-Schenkel 16 der Abscheidungsrückführkanäle weist eine in Richtung des Drallströmungskanals 12 verlaufende Komponente auf.

Der Einlasskanal 7 ist von einem das Zentralteil 2 durchsetzenden Querrohr 19 gebildet (vgl. Fig. 1). Dieses Querrohr 19 ist an einem Ende verschlossen bzw. verschließbar, so dass mehrere Möglichkeiten für eine im Einzelnen nicht dargestellte Zuführleitung gegeben sind. Das Zentralteil 2 mit dem Querrohr 19 und dem Führungsrohr 10 bildet zweckmäßigerweise ein einziges Gussstück. Eine von oben in das Querrohr 19 eingeschraubte Schraube 21 hält den Schraubenkörpereinsatz 11 im Führungsrohr 10. In Fig. 1 ist weiterhin erkennbar, dass das Zentralteil 2 im Bereich bzw. in Höhe des Einlasskanals 7 eine horizontal umlaufende Innenauskehlung 22 mit teilkreisförmigem bis teilelliptischem Querschnitt als Koaleszenzhilfe aufweist.

Der Auslass 8 ist oberhalb des Filtereinsatzes 9 am Zentralteil 2 vorgesehen, und zwar unmittelbar unterhalb der Deckelanordnung 3. Ebenso wie beim Einlasskanal 7 kann auch hier die Anordnung so getroffen sein, dass auf der gegenüberliegenden Seite ein verschlossener oder verschließbarer Ansatz 23 für einen weiteren Auslass vorgesehen ist. Das Gehäuse 1 bzw. die Längskammer 5 weisen im Bereich des Unterteils 4 kreiszylindrischen Querschnitt auf. Das Unterteil 4 selbst kann aus durchsichtigem Kunststoff, wie z. B. Polycarbonat, gefertigt sein. Falls aber sicherheitstechnische Belange es erfordern sollten, wird man das Unterteil 4 ebenso wie den Rest der Vorrichtung aus Aluminium fertigen. Im Bereich des Zentralteils 2 weist das Gehäuse 1 bzw. die Längskammer 5 im Wesentlichen rechteckigen, im Ausführungsbeispiel quadratischen Querschnitt auf.

Die Funktionsweise der Vorrichtung lässt sich wie folgt beschreiben: Die über den Einlasskanal 7 einströmende Flüssigkeit fließt zwischen dem Führungsrohr 10 und dem Schraubenkörpereinsatz 11 nach unten, wobei ihr eine schraubenförmige Bewegung erteilt wird. Nach dem Austreten aus den Fluidaustrittsöffnungen 13 erfolgt eine Umlenkung um 180° nach oben, wobei Fluidtröpfchen höherer Dichte nach unten absinken. Oberhalb der Fluidaustrittsöffnungen 13 sich an den Wandungen festsetzende Tröpfchen höherer Dichte koaleszieren und werden über die Abscheidungsrückführkanäle 14 ebenfalls nach unten in das Unterteil 4 überführt, wobei die aus den Fluidaustrittsöffnungen 13 austretenden Teilströme durch Saugwirkung diese Überführung unterstützen. Die Koaleszenzwirkung tritt auch im Bereich der Innenauskehlung 22 sowie der dem Unterteil 4 zugewandten Seite des Filtereinsatzes 9 auf. Im Filtereinsatz 9 werden schließlich die Schmutzpartikel festgehalten und die Flüssigkeit niederer Dichte strömt über den Auslass 8 aus. Nach Unterbrechen des Flüssigkeitszulaufs werden durch Öffnen der Entlüftungsschraube 44 und des Ablasshahns 28 die vom Filtereinsatz 9 festgehaltenen Schmutzpartikel und Fluidpartikel höherer Dichte im Zuge des Absinkens des Flüssigkeitsspiegels in das Unterteil 4 und von dort über den Ablasshahn 28 nach außen befördert.

Zweckmäßigerweise besteht der Filtereinlass 9, aus Papier und Falten 24 dieses Filtereinsatzes 9 liegen dann parallel bzw. senkrecht zu den Seiten des Zentralteils 2.

## Patentansprüche

1. Vorrichtung zum Abtrennen von Feststoffteilchen und Fluiden höherer Dichte von Fluiden niederer Dichte, wobei ein Gehäuse (1) aus mit Einlasskanal (7) und Auslass (8) versehenem Zentralteil (2), oberer Deckelanordnung (3) und becherförmigem Unterteil (4) eine Längskammer (5) bildet,
wobei im Unterteil (4) ein Umlenkungsabscheider (6) ausgebildet ist sowie im Zentralteil (2) ein Filtereinsatz (9) angeordnet ist,
wobei die Deckelanordnung (3) aus einem Betätigungselement (30), einer Spannbrücke (31) und einem Deckel (33) besteht,
wobei durch Betätigung des Betätigungselementes (30) die Spannbrücke (31) an dem Zentralteil (2) fixierbar ist,
wobei das Betätigungselement (30) die Spannbrücke (31) durchgreift und wobei durch Betätigung des Betätigungselementes (30) der unterhalb der Spannbrücke (31) angeordnete Deckel (32) von dem Betätigungselement (30) beaufschlagbar und an das Zentralteil (2) andrückbar ist
und wobei ein sich am Deckel (32) abstützendes Andrückelement den Filtereinsatz (9) gegen einen Sitz (26) drückt.

2. Vorrichtung nach Anspruch 1, wobei die Spannbrücke (31) durch Verdrehen des Betätigungselementes (30) bajonettverschlussartig an dem Zentralteil (2) fixierbar ist.

3. Vorrichtung nach Anspruch 2, wobei an die Spannbrücke (31) Fixierungsnasen (34) angeschlossen sind und wobei die Fixierungsnasen (24) beim Verdrehen des Betätigungselementes (30) aus einer freien Stellung in eine Bajonettverschlussstellung überführbar sind, in welcher Bajonettverschlussstellung die Fixierungsnasen (34) am Zentralteil (2) angeschlossene Fixierungsvorsprünge (35) hintergreifen bzw. untergreifen.

4. Vorrichtung nach einem der Ansprüche 1 bis 3, wobei bei einem Verdrehen des Betätigungselementes (30) in der fixierten Stellung der Spannbrücke (31) eine Druckbeaufschlagung durch das Betätigungselement (30) auf den Deckel (33) ausgeübt wird, so dass der Deckel (32) an das Zentralteil (2) gedrückt wird.

5. Vorrichtung nach Anspruch 4, wobei das die Spannbrücke (31) durchgreifende Betätigungselement (30) als Schraubelement ausgebildet ist und ein Außengewinde (36) aufweist und wobei eine das Betätigungselement (30) aufnehmende Öffnung (37) in der Spannbrücke (31) ein mit dem Außengewinde (36) des Betätigungselementes (30) wechselwirkendes Innengewinde (38) aufweist.

6. Vorrichtung nach einem der Ansprüche 1 bis 5, wobei sich das Andruckelement federnd am Deckel (32) abstützt.

7. Vorrichtung nach Anspruch 6, wobei zumindest eine Schraubenfeder zwischen Deckel (32) und Andruckelement angeordnet ist.

8. Vorrichtung nach einem der Ansprüche 1 bis 7, wobei das Andruckelement als rechteckiger Andruckrahmen ausgebildet ist und wobei an den Rechteckseiten des Andruckrahmens miteinander verbundene Andruckstreben (41) vorgesehen sind.

9. Vorrichtung nach einem der Ansprüche 1 bis 8, wobei im Deckel (32) eine verschließbare Entlüftungsöffnung (42) vorgesehen ist und wobei die Spannbrücke (31) zumindest eine Zugangsöffnung (43) aufweist, die in der fixierten Stellung der Spannbrücke (31) mit der Entlüftungsöffnung (42) des Deckels (32) fluchten.
